# DEMANDE DE BREVET EUROPEEN

(11) **EP 2 469 359 A1**
(43) Date de publication de la demande: **27.06.2012**
(21) Numéro de dépôt: 11190877.8
(22) Date de dépôt: 28.11.2011
(51) Int. Cl.: G04B 37/08, C08L 15/00, F16J 15/10

(54) **Joint et procédé de fabrication d'un tel joint**

(30) Priorité: 23.12.2010 CH 21662010
(71) Demandeur: BIWI S.A., 2855 Glovelier (CH)
(72) Inventeur: Bourquard, Pascal, 2854 Bassecourt (CH)
(74) Mandataire: GLN

(57) **Abrégé**

La présente invention concerne un joint susceptible d'être utilisé notamment dans une pièce d'horlogerie. Ce joint comprend au moins un élastomère et entre 50 et 100 parts en poids d'un mélange de noir de carbone, de silice et d'organosilane pour 100 parts en poids dudit élastomère. La présente invention concerne également un procédé de fabrication d'un tel joint comprenant les étapes suivantes :
a) mélangeage d'une composition comprenant au moins un élastomère et entre 50 et 100 parts en poids d'un mélange de noir de carbone, de silice et d'organosilane pour 100 parts en poids dudit élastomère mélange,
b) mélangeage de la composition à une température inférieure à 140°C,
c) addition à la composition d'autres réactifs,
d) moulage de la composition obtenue à l'étape c) sous la forme d'un joint, et
e) cuisson du joint.

## Description

### Domaine technique

La présente invention se rapporte aux joints, susceptibles d'être utilisés notamment dans des pièces d'horlogerie, en tant que garniture d'étanchéité. L'invention concerne également un procédé de fabrication de tels joints ainsi que des pièces d'horlogerie comprenant de tels joints.

### Etat de la technique

Dans le domaine de l'horlogerie, les joints sont en général utilisés pour assurer l'étanchéité entre deux pièces mobiles, par exemple couronne de remontoir et tube de couronne, ou entre deux pièces fixes, par exemple fond et carrure.

De tels joints peuvent être toriques, plats ou de forme. Ils sont généralement réalisés en matières plastiques, silicone ou caoutchouc.

Dans le domaine de l'horlogerie, les joints doivent répondre à un cahier des charges spécifique tel que réduction des vibrations, fluage faible, tribologie spécifique afin d'éviter l'utilisation de lubrifiant, résistance à l'abrasion et résistance aux huiles. En ce qui concerne plus spécifiquement les propriétés mécaniques, on recherche des joints présentant une déformation rémanente sous contrainte (DRC) la plus faible possible, tout en atteignant un module à 100% et un allongement à la rupture optimal adéquats.

Les joints utilisés à l'heure actuelle ne permettent pas de répondre à ce cahier des charges spécifique.

Un but de la présente invention est donc de pallier cet inconvénient, en proposant de nouveaux joints permettant de répondre au cahier des charges spécifique des pièces d'horlogerie.

### Divulgation de l'invention

A cet effet, il est proposé un joint susceptible d'être utilisé notamment dans une pièce d'horlogerie, caractérisé en ce qu'il comprend au moins un élastomère et entre 50 et 100 parts en poids d'un mélange de noir de carbone, de silice et d'organosilane pour 100 parts en poids dudit élastomère.

La présente invention concerne également un procédé de fabrication d'un tel joint, et comprenant les étapes suivantes :
a) mélangeage d'une composition comprenant au moins un élastomère et entre 50 et 100 parts en poids d'un mélange de noir de carbone, de silice et d'organosilane pour 100 parts en poids dudit élastomère mélange,
b) mélangeage de la composition à une température inférieure à 140°C,
c) addition à la composition d'autres réactifs,
d) moulage de la composition obtenue à l'étape c) sous la forme d'un joint, et
e) cuisson du joint.

La présente invention concerne également une pièce d'horlogerie comprenant un joint tel que défini ci-dessus ou susceptible d'être obtenu par le procédé défini ci-dessus.

### Mode(s) de réalisation de l'invention

Selon l'invention, le joint comprend au moins un élastomère et entre 50 et 100 parts, et de préférence entre 80 et 100 parts en poids d'un mélange de noir de carbone, de silice et d'organosilane pour 100 parts en poids dudit élastomère.

De préférence, l'élastomère est choisi parmi le groupe comprenant les élastomères nitriles et les élastomères fluorocarbonés. Les élastomères nitriles comprennent les élastomères copolymères butadiène-acrylonitrile (NBR) ainsi que les élastomères copolymères butadiène-acrylonitrile hydrogéné (HNBR). Les élastomères fluorocarbonés sont communément appelés FKM. Ces élastomères peuvent être utilisés seuls ou en mélange avec d'autres élastomères appropriés.

De préférence, le mélange de noir de carbone, de silice et d'organosilane peut comprendre entre 15 et 80 parts de noir de carbone, entre 15 et 80 parts de silice et entre 0,5 et 5 parts d'organosilane pour 100 parts dudit mélange.

De préférence, le mélange de noir de carbone, de silice et d'organosilane peut comprendre entre 40 et 60 parts de noir de carbone, entre 40 et 60 parts de silice et entre 1 et 3 parts d'organosilane pour 100 parts dudit mélange.

On peut utiliser un seul noir de carbone ou un coupage de plusieurs noirs de carbone de grades ASTM différents. De préférence, on utilise un noir de carbone de grade N990 ou N550. En mélange, on peut utiliser un noir de carbone de grade N990 avec un noir de carbone de grade N550, la proportion de noir de carbone N990/N550 étant comprise entre 2:1 et 5:1.

De préférence, la silice utilisée peut être toute silice renforçante connue de l'homme du métier, notamment toute silice précipitée amorphe. De préférence, ces silices présentent une surface BET ainsi qu'une surface spécifique CTAB toutes deux inférieures à 500 m²g⁻¹, de préférence inférieures à 200 m²g⁻¹, et plus préférentiellement inférieures à 130 m²g⁻¹.

D'une manière avantageuse, l'organosilane est au moins bifonctionnel et comprend un groupe fonctionnel capable de former des liaisons covalentes avec les groupes fonctionnels d'au moins l'un des composants de la composition, en particulier l'élastomère et/ou les charges.

Le groupe fonctionnel capable de former des liaisons covalentes avec les groupes fonctionnels d'au moins l'un des composants de la composition peut être un hydroxyalkyle, un aminoalkyle, un polyaminoalkyle, un époxyalkyle, notamment un glycidylalkyle, un halogénoalkyle, un mercaptoalkyle, un alkylsulfure ou un alkylpolysulfure pouvant contenir un atome de silicium, un azidoalkyle, un radical cyclique ou acyclique comportant au moins une double liaison, tel que radical vinyl.

Des exemples des organosilanes qui peuvent être utilisés sont le 3-aminopropyl-triéthoxysilane, le vinyltriméthoxysilane, le vinyltriéthoxysilane, le 3-glycidoxypropyl-triméthoxysilane, le 3-mercaptopropyl-triméthoxysilane, le N-béta-aminoéthyl-3-aminopropyl-triméthoxysilane, le 3-aminopropyl-triméthoxysilane, le 3-aminoéthyl-triéthoxysilane, le 3-glycidoxyéthyl-triéthoxysilane, le 3-mercaptopropyl- triéthoxysilane, le N-béta-aminoéthyl-3-aminoéthyl-triméthoxysilane, le 3-aminobutyl- triéthoxysilane, le 3-aminoéthyl-triméthoxysilane, le 3-aminopropyl-méthyl-diéthoxysilane, le bis-[γ-(triéthoxysilyl)-propyl-tetrasulfate, 3-mercaptopropyl triméthoxysilane, le tétrasulfure de bis triéthoxy silylpropyle, le tétrasulfure de bis triméthoxy silylpropyle, le p-(triméthoxysilyl)benzyl diazoacétate, le 4-(triméthoxysilyl)cyclohexylsulfonyl azidure, le 6-(triméthoxysilyl)hexylsulfonyl azidure.

Les organosilanes préférés sont le vinyltriméthoxysilane, et le bis-[γ-(triéthoxysilyl)-propyl-tetrasulfate, 3-mercaptopropyl triméthoxysilane.

On peut utiliser un seul organosilane ou un mélange d'organosilanes.

D'une manière avantageuse, le joint selon l'invention peut être obtenu à partir d'une composition comprenant d'autres charges, renforçantes ou non, des agents de vulcanisation propres à l'élastomère, et autres additifs traditionnels communément utilisés par l'homme du métier dans le domaine des formulations à base d'élastomère, et plus particulièrement des formulations à base de nitrile ou de fluoroélastomère.

Plus particulièrement, le joint peut comprendre en outre entre 5 et 20 parts, de préférence entre 8 et 15 parts en poids de plastifiant pour 100 parts en poids dudit élastomère. Un tel plastifiant est par exemple une huile ou un polymère.

En outre, le joint peut comprendre entre 1 et 10 parts, de préférence entre 2 et 5 parts en poids d'agent de réticulation ou de vulcanisation pour 100 parts en poids dudit élastomère. De tels agents sont par exemple l'oxyde de zinc ou l'acide stéarique.

Le joint selon l'invention est obtenu par un procédé comprenant les étapes suivantes :
a) mélangeage d'une composition comprenant l'élastomère et le mélange de noir de carbone, de silice et d'organosilane,
b) mélangeage de la composition à une température inférieure à 140°C, de préférence à 135°C,
c) addition à la composition d'autres réactifs, tels que plastifiants, agents de réticulation ou vulcanisation,
d) moulage de la composition obtenue à l'étape c) sous la forme d'un joint, et
e) cuisson du joint.

Le moulage peut se faire par tout procédé connu, tel qu'en injection ou en compression. La vulcanisation (ou cuisson) est conduite de manière connue à une température généralement comprise entre 130°C et 200°C, pendant un temps suffisant qui peut varier par exemple entre 60 et 180 secondes en fonction notamment de la température de cuisson, du système de vulcanisation adopté et de la cinétique de vulcanisation de la composition du joint.

Le joint obtenu peut être un joint O'ring ou X'ring.

Exemple

Un joint a été fabriqué selon le procédé de l'invention avec un élastomère NBR et un mélange de silice (amorphe précipitée), de silane (3-mercaptopropyltriméthoxysilane) et de noir de carbone N990MT. Le moulage en compression ou en injection est réalisé avec un temps de vulcanisation de 90 s.

Le joint obtenu présente un module 100% de 4,95 MPa (NF T 46-002) et une déformation rémanente sous contrainte de 9,39 % (NF T 46-011). Il répond donc au cahier des charges.

## Revendications

1. Joint susceptible d'être utilisé notamment dans une pièce d'horlogerie, **caractérisé en ce qu'**il comprend au moins un élastomère et entre 50 et 100 parts en poids d'un mélange de noir de carbone, de silice et d'organosilane pour 100 parts en poids dudit élastomère.

2. Joint selon la revendication 1, **caractérisé en ce que** l'élastomère est choisi parmi le groupe comprenant les élastomères nitriles et les élastomères fluorocarbonés.

3. Joint selon l'une quelconque des revendications précédentes, **caractérisé en ce que** le mélange de noir de carbone, de silice et d'organosilane comprend entre 15 et 80 parts de noir de carbone, entre 15 et 80 parts de silice et entre 0,5 et 5 parts d'organosilane pour 100 parts dudit mélange

4. Joint selon l'une quelconque des revendications précédentes, **caractérisé en ce que** ledit mélange comprend un coupage de plusieurs noirs de carbone de grades ASTM différents.

5. Joint selon l'une quelconque des revendications précédentes, **caractérisé en ce qu'**il comprend en outre entre 5 et 20 parts en poids de plastifiant pour 100 parts en poids dudit élastomère.

6. Joint selon l'une quelconque des revendications précédentes, **caractérisé en ce qu'**il comprend en outre entre 1 et 10 parts en poids d'agent de réticulation pour 100 parts en poids dudit élastomère.

7. Procédé de fabrication d'un joint susceptible d'être utilisé notamment dans une pièce d'horlogerie selon l'une quelconque des revendications 1 à 6, **caractérisé en ce qu'**il comprend les étapes suivantes :
a) mélangeage d'une composition comprenant au moins un élastomère et entre 50 et 100 parts en poids d'un mélange de noir de carbone, de silice et d'organosilane pour 100 parts en poids dudit élastomère mélange,
b) mélangeage de la composition à une température inférieure à 140°C,
c) addition à la composition d'autres réactifs,
d) moulage de la composition obtenue à l'étape c) sous la forme d'un joint, et
e) cuisson du joint.

8. Procédé selon la revendication 7, **caractérisé en ce que** l'élastomère est choisi parmi le groupe comprenant les élastomères nitriles et les élastomères fluorocarbonés.

9. Procédé selon l'une quelconque des revendications 7 et 8, **caractérisé en ce que** le mélange de noir de carbone, de silice et d'organosilane comprend entre 15 et 80 parts de noir de carbone, entre 15 et 80 parts de silice et entre 0,5 et 5 parts d'organosilane pour 100 parts dudit mélange.

10. Procédé selon l'une quelconque des revendications 7 à 9, **caractérisé en ce que** ledit mélange comprend un coupage de plusieurs noirs de carbone de grades ASTM différents.

11. Procédé selon l'une quelconque des revendications 7 à 10, **caractérisé en ce que** les autres réactifs comprennent un plastifiant, présent dans une quantité comprise entre 5 et 20 parts en poids pour 100 parts en poids dudit élastomère.

12. Procédé selon l'une quelconque des revendications 7 à 11, **caractérisé en ce que** les autres réactifs comprennent un agent de réticulation, présent dans une quantité comprise entre 1 et 10 parts en poids pour 100 parts en poids dudit élastomère.

13. Pièce d'horlogerie comprenant un joint selon l'une quelconque des revendications 1 à 6 ou susceptible d'être obtenu par un procédé selon l'une quelconque des revendications 7 à 12.
